# EUROPÄISCHE PATENTANMELDUNG

(11) **EP 1 112 917 A2**
(43) Veröffentlichungstag der Anmeldung: **04.07.2001**
(21) Anmeldenummer: 00128351.4
(22) Anmeldetag: 22.12.2000
(51) Int. Cl.: B62D 33/02

(54) **Hängerunge für Lastfahrzeuge**

(30) Priorität: 03.01.2000 DE 20000004 U
(71) Anmelder: F. HESTERBERG & SÖHNE GmbH & Co. KG, D-58256 Ennepetal (DE)
(72) Erfinder: Breme, Stefan, 58339 Breckerfeld (DE); Siekmann, Rolf, 45549 Sprockhövel (DE); Feinbier, Joachim, 58256 Enneptal (DE); Deppe, Hans-Werner, 58135 Hagen (DE)
(74) Vertreter: Kneissl, Richard, Dr.

(57) **Zusammenfassung**

Die erfindungsgemäße Runge (1) besitzt wie die aus dem DE-GM 298 09 267.0 bekannte Runge ein Schwenkglied (5), das an seiner Unterseite mittels eines querverlaufenden Rundstäbs in einer oben offenen Lagerhalbschale einer am Fahrzeugrahmen befestigten Rungenaufnahme (11) gelagert ist. Innerhalb des Schwenkglieds (5) ist wie bei der bekannten Runge ein Keil längsverschieblich gelagert, der mittels einer Feder in eine Tasche (13) an der Rungenaufnahme (11) gedrückt wird. Zum Entriegeln der Runge von der Rungenaufnahme ist das Schwenkglied zweiteilig ausgebildet. Durch etwa rechtwinkliges Abkippen des oberen Teils gegenüber dem unteren Teil kann der Keil mittels eines Zugglieds aus der Tasche gezogen werden. Nachteilig an der bekannten Runge ist, daß durch das Abkippen des oberen Teils des Schwenkglieds die Hebellänge desselben verkürzt wird, was die Betätigung erschwert. Bei der erfindungsgemäßen Runge ist der obere Teil des Schwenkglieds (15) bei verriegelter Runge nach unten geklappt. Zum Ausheben des Keils aus der Tasche wird er nach oben geklappt und rastet in dieser gestreckten Stellung mittels eines Rastmechanismus ein, der durch Drücken eines Schiebers (20) beim Verriegeln der Runge außer Wirkung gesetzt werden kann.

## Beschreibung

Die Erfindung betrifft eine Hängerunge für Lastfahrzeuge, mit einer Rollenanordnung an ihrer Oberseite, mit deren Hilfe sie auf einer über der Seitenkante des Fahrzeugs angeordneten Schiene seitlich verschiebbar ist, und mit einer Befestigungsvorrichtung an ihrer Unterseite, mit deren Hilfe sie am Fahrzeugrahmen verriegelbar ist, wobei die Berfestigungsvorrichtung eine am Fahrzeugrahmen anzubringende Rungenaufnahme mit oben offener Lagerhalbschale, die einen querverlaufenden Rundstab an der Unterseite eines gestreckten zweiarmigen Schwenkglieds aufnimmt, das in der Runge mit einer horizontalen Achse gelagert ist und das in der eingeschwenkten Lage in einer Ausnehmung an der Vorderseite der Runge liegt, sowie eine Verriegelungsvorrichtung aufweist, mit deren Hilfe die Runge samt dem eingeschwenkten Schwenkglied am Rahmen verriegelbar ist, wobei die Verriegelungsvorrichtung aus einem in einer Führung senkrecht geführten Verriegelungskeil besteht, der in der eingeschwenkten Lage des Schwenkglieds durch eine Feder in eine Tasche an der Rungenaufnahme gedrückt wird, und wobei an der Oberseite des Schwenkglieds über eine horizontale Achse ein Betätigungshebel angelenkt ist, der mittels eines Zugglieds derart mit dem Verriegelungskeil verbunden ist, daß beim Verschwenken des Betätigungshebels gegenüber dem Schwenkglied der Verriegelungskeil aus der Tasche an der Rungenaufnahme gehoben wird.

Hängerrungen dieser Art, welche im Fachjargon auch als Curtain Sider-Rungen bezeichnet werden, können mit Hilfe der Befestigungsvorrichtung vom Fahrzeugrahmen gelöst und zur Seite geschoben werden, um das Be- bzw. Entladen des Fahrzeugs zu erleichtern. Die Schiene auf welcher die Rollenanordnung an der Oberseite der Hängerunge läuft, bildet üblicherweise einen Teil eines Plangengestells.

Bei der eingangs näher beschriebenen Hängerunge, die aus dem DE-GM 298 09 267.0 bekannt ist, befindet sich in der Schließstellung der Betätigungshebel bezüglich des Schwenkglieds in einer gestreckten Lage. Durch Ziehen am Betätigungshebel wird dieser gegenüber dem Schwenkglied abgewinkelt, wobei der Verriegelungskeil aus der Tasche an der Rungenaufnahme gehoben wird. Anschließend kann das Schwenkglied verschwenkt und der Rundstab an der Unterseite des Schwenkglieds aus der oben offenen Lagerhalbschale der Rungenaufnahme ausgehängt werden, worauf sich die Runge zur Seite schieben läßt.

Bei dieser Runge hat es sich als Nachteil erwiesen, daß durch das Verschwenken des Betätigungshebels bezüglich des Schwenkglieds der Kraftarm des letzteren verkürzt wird, was die Handhabung beim Lösen der Runge vom Fahrzeugrahmen erschwert.

Der Erfindung lag die Aufgabe zugrunde, eine Hängerunge der eingangs naher beschriebenen Art so weiterzubilden, daß der erwähnt Nachteil nicht auftritt.

Die erfindungsgemäße Lösung dieser Afugabe besteht darin, daß das Zugglied derart mit dem Betätigungshebel verbunden ist, daß bei in die Tasche abgesenktem Verriegelungskeil der Betätigungshebel auf das Schwenkglied zurückgeschlagen ist und beim Ausschwenken des Betätigungshebels in eine bezüglich des Schwenkglieds gestreckte Lage der Verriegelungskeil aus der Tasche gehoben wird, und daß weiterhin ein Fixierungsmechanismus vorgesehen ist, mit dessen Hilfe der Betätigungshebel bezüglich des Schwenkglieds in einer gestreckten Lage gehalten werden kann.

Bei der erfindungsgemäßen Runge befindet sich in der Schließstellung der Betätigungshebel in einer auf das Schwenkglied zurückgeschlagenen Stellung, wobei das Zugglied derart am Betätigungshebel angelenkt ist, daß beim Ausschwenken des Betätigungshebels in eine bezüglich des Schwenkglieds gestreckten Lage der Verriegelungskeil aus der Tasche an der Rungenaufnahme gezogen wird. Damit diese gestreckte Lage für der anschließenden Verschwenkvorgang des Schwenkglieds auch aufrecht erhalten wird, besitzt die erfindungsgemäße Runge den erwähnten Fixierungsmechanismus. Der Kraftarm beim Verschwenken des Schwenkglieds und beim anschließenden Lösen der Runge vom Fahrzeugrahmen ist also länger, da das Schwenkglied um den Betätigungshebel verlängert ist. Dies ist insbesondere beim Befestigen der Runge am Fahrzeugrahmen günstig, weil die Schiene an der Oberseite des Fahrzeugs, auf der die Runge mittels einer Rollenanordnung läuft, sich durchbiegt, wenn sie nicht unterstützt ist, weshalb die Runge beim Befestigen am Fahrzeugrahmen angeoben werden muß, was durch den verlängerten Kraftarm erleichtert wird.

Die Erfindung wird nachstehend an einer speziellen Ausführungform der Runge, die auch die vorteilhaften Weiterbildungen verkörpert, die sich aus den Unteransprüchen ergeben, anhand der beigefügten Zeichnungen näher erläutert.

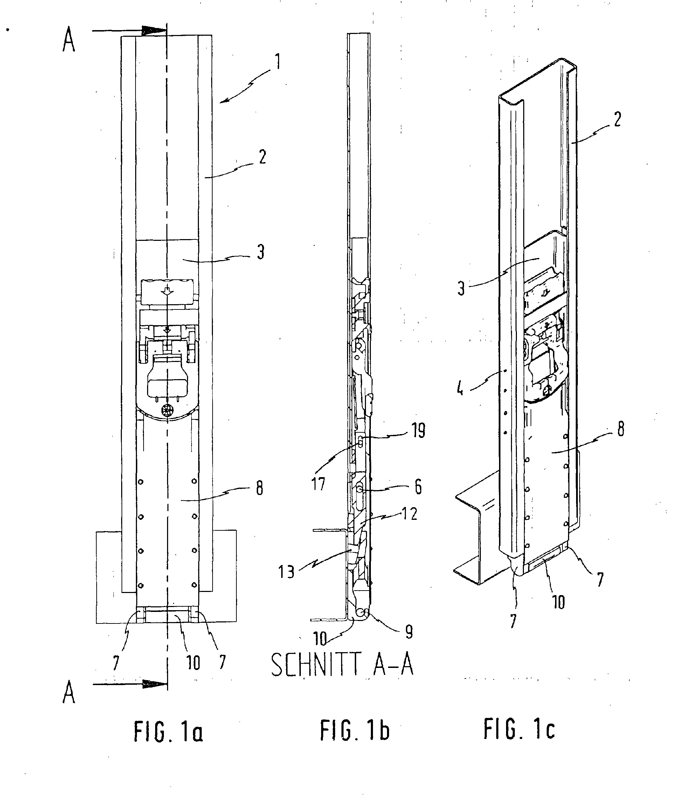

In den Zeichnungen zeigen
Fig. 1a ein Ansicht des unteren Teils der erfindungsgemäßen Hangerunge;
Fig. 1b einen Schnitt an der Linie A-A von Fig. 1a;
Fig. 1c eine perspektivische Ansicht der Runge von Fig. 1a;

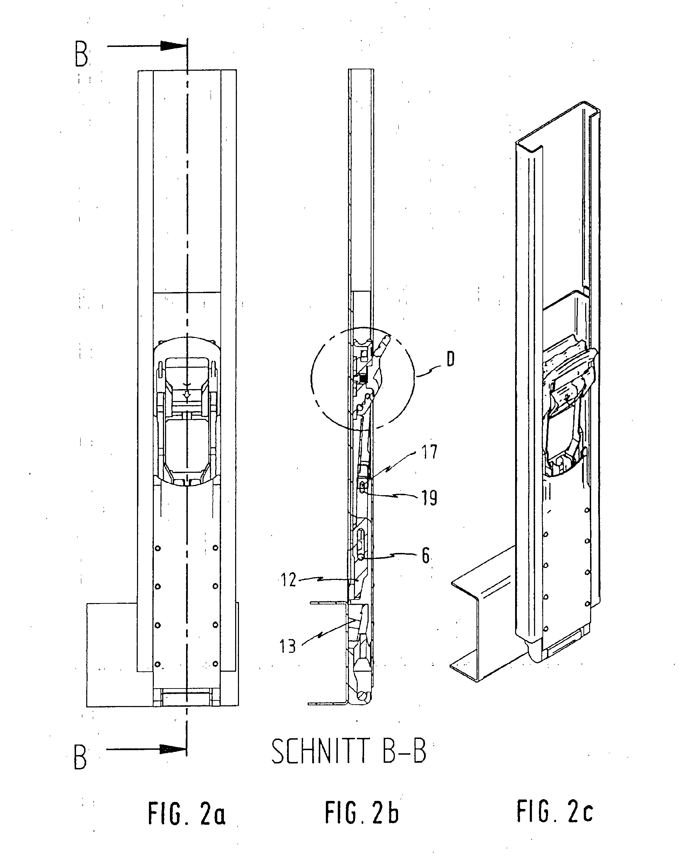

Fig. 2a, 2b und 2c ähnliche Ansichten wie die Fig. 1a, 1b und 1c nach einem ersten Schritt des Lösevorgangs der Runge vom Fahrzeugrahmen;

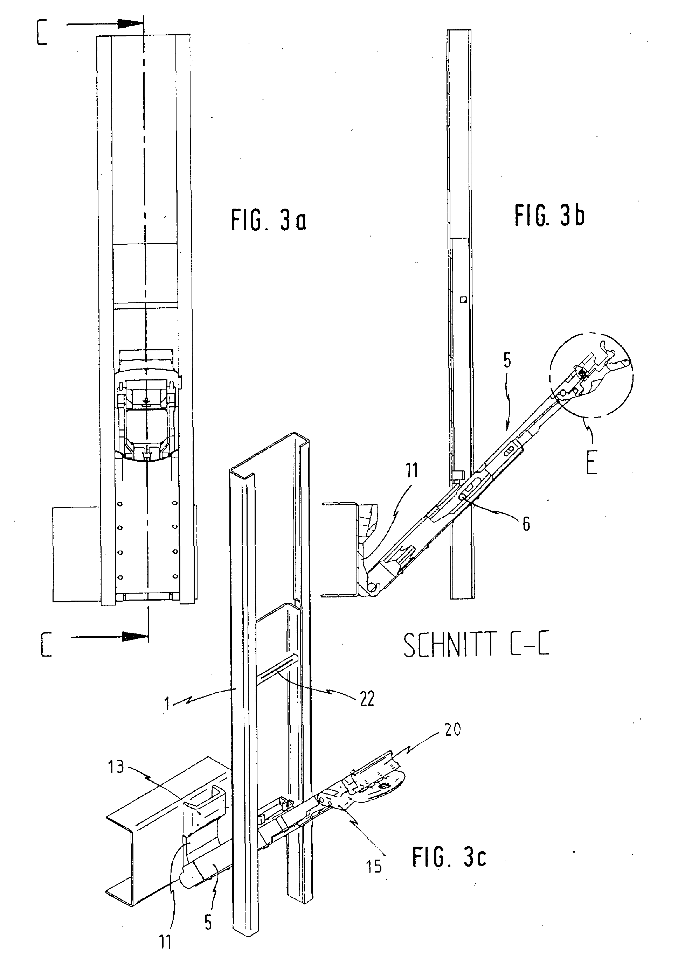

Fig. 3a, 3b und 3c ähnliche Ansichten wie die Fig. 1a, 1b und 1c nach einem zweiten Schritt des Lösevorgangs der Runge vom Fahrzeugrahmen;
Fig. 4 eine Einzelheit von Fig. 2b; und
Fig. 5 eine Einzelheit von Fig. 3b.

Gemaß den Zeichnungen besitzt eine erfindungsgemäße Hängerunge 1, von der nur der untere Teil dargestellt ist, da der obere Teil eine übliche Bauart aufweist, einen vertikalen Körper 2 aus einem C-Profil, in das eine Trägerplatte 3 aus einem U-Profil eingeschoben und durch Nieten 4 befestigt ist. Die seitlichen Schenkel des U-Profils sind doppelt abgewinkelt und so hoch, daß sie in den seitlichen Nuten des C-Profils 2 Platz haben. In den seitlichen Schenkeln des U-Profils 2 ist ein Schwenkglied 5 mittels einer Achse 6 gelagert. Das Schwenkglied 5 besteht im wesentlichen aus zwei Stäben 7, die durch eine Abdeckplattte 8 miteinander verbunden sind. An der Unterseite trägt das Schwenkglied 5 einen Rundstab 9, der in eine oben offene Lagerhalbschale 10 einer am Fahrzeugrahme anzubringenden Rungenaufnahme 11 einhängbar ist. Ein Verriegelungskeil 12 ist mittels einer im Schwenkglied angeordneten Führung senkrecht geführt. Er wird in der Schließstellung mittels einer nicht dargestellten Feder in ein Tasche 13 an der Rungenaufnahme 11 gedrückt. Am oberen Ende des Schwenkglieds 5 ist mittels einer Achse 14 ein Betätigungshebel 15 angelenkt. Ein Zugglied 16 ist einerseits mittels einer Achse 17 mit dem Verriegelungskeil 12 und andererseits mittels einer Achse 18 mit dem Betätigungshebel 15 verbunden. Die Achse 17 geht durch ein Langloch 19 im Verriegelungskeil 12 hindurch, so daß der Verriegelungskeil 12 durch die erwähnte, nicht dargestellte Feder fest in die Tasche 13 der Rungenaufnahme 11 gedrückt wird. Die Anlenkung des Zugglieds 16 am Betätigungshebel 15 ist derart, daß bei nach unten geklapptem Betätigungshebel 15 der Verriegelungskeil 12 durch die erwähnte, nicht dargestellte Feder in die Tasche 13 gedrückt wird. Wenn der Betätigungshebel 15 nach oben geschwenkt wird, wird vermittels des Zugglieds 16 der Verriegelungskeil 12 aus der Tasche 13 an der Rungenaufnahme 11 gezogen.

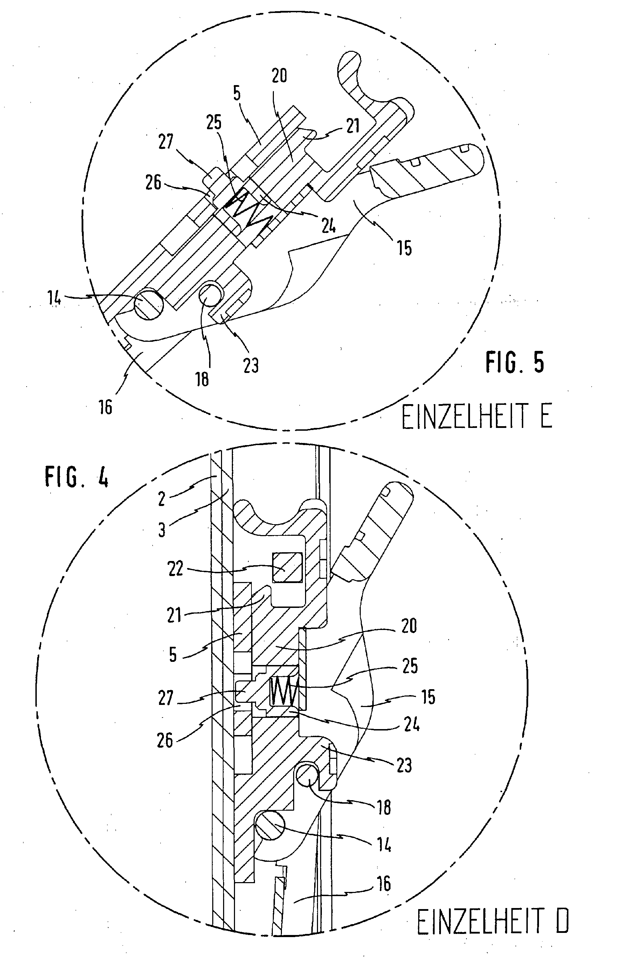

Um das Schwenkglied 5 in der eingeschwenkten Lage festzuhalten und um den hochgeschwenkten Betätigungshebel 15 in dieser Lage zu fixieren, besitzt die Runge einen Schieber 20, der durch eine nicht dargestellte Feder in der Ruhelage nach oben geschoben wird und mittels eines ersten Hakens 21 hinter einen Gegenhalter 22 an der Runge 1 greift. In der in den Fig. 4 und 5 gezeigten gedrückten Stellung greift der Schieber 20 mittels eines zweiten Hakens 23 hinter die Anlenkachse 18 des Zugglieds 16 am Betätigungshebel 15. Die Achse 18 dient somit als Gegenhalter für den zweiten Haken 23. Im Schieber 20 ist ein Bolzen 24 gelagert, der durch eine Feder 25 in eine Öffnung 26 im Schwenkglied 5 gedrückt wird. In der in Fig. 4 gezeigten Lage wird der Bolzen 24, der mit einem Zapfen 27 an der Trägerplatte 3 anliegt, außder der Öffung 26 gehalten, so daß sich der Schieber 20 bewegen läßt.

Zum Öffnen des Verschlusses wird zunächst der Betätigungshebel 15 in die aufgerichtet Lage geschwenkt (Fig. 4), wobei der Verriegelungskeil 12 aus der Tasche 13 an der Rungenaufnahme 11 gezogen wird, worauf der Schieber 20 niedergedrückt wird. Dadurch kommt der erste Haken 21 vom Gegenhalter 22 fei, während gleichzeitig der zweite Haken 23 sich hinter der Achse 18 verhakt. Wird nun das Schwenkglied 5 durch Ziehen am Betätigungshebel 15 ausgeschwenkt, so drückt die Feder 25 den Bolzen 24 in die Öffnung 26, so daß der Schieber 20 in der niedergerückten Lage fixiert wird. In dieser Schwenklage des Schwenkglieds 5 kann der Rundstab 9 aus der Lagerhalbschale 10 ausgehängt werden, worauf sich die Runge 1 seitlich verschieben läßt.

Beim Schließen wird nach dem Einhängen des Rundstabs 9 in die Lagerhalbschale 10 durch Drücken gegen den Betätigungshebel 15 das Schwenkglied 5 eingeschwenkt, worauf der Zapfen 27 in Anlage an die Trägerplatte 3 gerät, wodurch der Bolzen 24 zunrückgedrückt wird und der Schieber durch die erwähnte, nicht dargestellte Feder nach oben geschoben wird, wobei der erste Haken 21 am Schieber 20 den Gegenhalter 22 an der Runge 1 hintergreift. Dabei kommt der zweite Haken 23 von der Achse 18 frei. Nun kann der Betätigungshebel 16 nach unten gesklappt werden, wobei der Verriegelungskeil 12 wieder in die Tasche 13 an der Rungenaufnahme 11 gerät.

Durch die Verwendung einer gesonderten Trägerplatte 3, die mittels Nieten 4 im Rungenkörper 2 befestigt ist, ergeben sich besondere Vorteile, die insbesondere darin liegen, daß für die Montage der Befestigungsvorrichtung nicht die ganze Runge gehandhabt werden muß und daß als eigentliche Runge nur ein durchgehendes Profil erforderlich ist, das nach Bedarf auf die erforderliche Länge geschnitten werden kann.

## Patentansprüche

1. Hängerunge (1) für Lastfahrzeuge, mit einer Rollenanordnung an ihrer Oberseite, mit deren Hilfe sie auf einer über der Seitenkante des Fahrzeugs angeordneten Schiene seitlich verschiebbar ist, und mit einer Befestigungsvorrichtung an ihrer Unterseite, mit deren Hilfe sie am Fahrzeugrahmen verriegelbar ist, wobei die Berfestigungsvorrichtung eine am Fahrzeugrahmen anzubringende Rungenaufnahme (11) mit oben offener Lagerhalbschale (10), die einen querverlaufenden Rundstab (9) an der Unterseite eines gestreckten zweiarmigen Schwenkglieds (5) aufnimmt, das in der Runge (1) mit einer horizontalen Achse (6) gelagert ist und das in der eingeschwenkten Lage in einer Ausnehmung an der Vorderseite der Runge (1) liegt, sowie eine Verriegelungsvorrichtung aufweist, mit deren Hilfe die Runge (1) samt dem eingeschwenkten Schwenkglied (5) am Rahmen verriegelbar ist, wobei die Verriegelungsvorrichtung aus einem in einer Führung senkrecht geführten Verriegelungskeil (12) besteht, der in der eingeschwenkten Lage des Schwenkglieds (5) durch eine Feder in eine Tasche (13) an der Rungenaufnahme (11) gedrückt wird, und wobei an der Oberseite des Schwenkglieds (5) über eine horizontale Achse (14) ein Betätigungshebel (15) angelenkt ist, der mittels eines Zugglieds (16) derart mit dem Verriegelungskeil (12) verbunden ist, daß beim Verschwenken des Betätigungshebels (15) gegenüber dem Schwenkglied (5) der Verriegelungskeil (12) aus der Tasche (13) an der Rungenaufnahme (11) gehoben wird, **dadurch gekennzeichnet,** daß das Zugglied (16) derart mit dem Betätigungshebel (15) verbunden ist, daß bei in die Tasche (13) abgesenktem Verriegelungskeil (12) der Betätigungshebel (15) auf das Schwenkglied (5) zurückgeschlagen ist und beim Ausschwenken des Betätigungshebels (15) in eine bezüglich des Schwenkglieds (5) gestreckte Lage der Verriegelungskeil (12) aus der Tasche (13) gehoben wird, und daß weiterhin ein Fixierungsmechanismus (20) vorgesehen ist, mit dessen Hilfe der Betätigungshebel (15) bezüglich des Schwenkglieds (5) in einer gestreckten Lage gehalten werden kann.

2. Hängerunge nach Anspruch 1, **dadurch gekennzeichnet**, daß das Schwenkglied (5) in der eingeschwenkten Lage durch einen gegen den Druck einer Feder entriegelbaren Einrastmechanismus gesichert ist.

3. Hängerunge nach Anspruch 1 und 2, **dadurch gekennzeichnet**, daß der Fixierungs-und der Einrastmechanismus aus einem gegen den Druck einer Feder bewegbaren Schieber (20) am Schwenkglied (5) besteht, der in der Ruhestellung das Schwenkglied (5) in dessen eingeschwenkter Lage sichert und der in der gedrückten Stellung das Schwenkglied (5) freigibt, aber die bezüglich des Schwenkglieds (5) gestreckte Lage des Betätigungshebels (15) fixiert.

4. Hängerunge nach Anspruch 3, **dadurch gekennzeichnet**, daß der Schieber (20) in der Ruhelage mit einem ersten Haken (21) hinter einen ersten Gegenhalter (22) an der Runge (1) und in der gedrückten Lage mit einem zweiten Haken (23) hinter einen zweiten Gegenhalter (Achse 18) am Betätigungshebel greift, wenn letzterer sich in einer bezüglich des Schwenkglieds gestreckten Lage befindet.

5. Hängerunge nach Anspruch 3 oder 4, **dadurch gekennzeichnet,** daß der Schieber (20) einen durch eine Feder (25) belasteten Bolzen (24) aufweist, der in der gedrückten Stellung des Schiebers (20) in eine Öffnung (26) am Schwenkglied (5) gedrückt wird, wobei der Bolzen (24) an seiner Stirnseite einen Zapfen (27) aufweist, der bei eingeschwenktem Schwenkglied (5) an der Runge (1) anliegt und den Bolzen (24) außerhalb der Öffnung (26) hält.

6. Hängerunge nach einem der vorhergehenden Ansprüche, **dadurch gekennzeichnet**, daß die Anlenkachse (17) des Zugglieds (16) am Verriegelungskeil (12) mittels eines Langlochs (19) in einem dieser beiden Teile gelagert ist.

7. Hängerunge nach eine der vorhergehenden Ansprüche, **dadurch gekennzeichnet**, daß der Körper (2) der Runge (1) aus einem C-Profil besteht, in das eine Trägerplatte (3) eingeschoben und darin befestigt ist, auf der die in der Runge (1) vorliegenden mechanischen Teile angebracht sind.

8. Hängerunge nach Anspruch 7, **dadurch gekennzeichnet,** daß die Trägerplatte (3) aus einem U-Profil besteht.

9. Hängerunge nach Anspruch 7 oder 8, **dadurch gekennzeichnet**, daß die Trägerplatte (3) durch Nieten (4) am Rungenkörper (2) befestigt ist.
